# EUROPÄISCHE PATENTSCHRIFT

(11) **EP 3 558 740 B1**
(45) Veröffentlichungstag und Bekanntmachung des Hinweises auf die Patenterteilung: **21.07.2021**
(21) Anmeldenummer: 17823076.9
(22) Anmeldetag: 14.12.2017
(51) Int. Cl.: B60K 6/485, B60W 10/02, B60W 10/06, B60W 10/26, B60W 30/188, F02D 41/00, B60W 20/10, B60W 20/12, B60W 20/19

(54) **VERFAHREN ZUM BETREIBEN EINES ANTRIEBSSYSTEMS, ANTRIEBSSYSTEM UND KRAFTFAHRZEUG**
METHOD FOR OPERATING A DRIVE SYSTEM, DRIVE SYSTEM, AND MOTOR VEHICLE
PROCÉDÉ PERMETTANT DE FAIRE FONCTIONNER UN SYSTÈME DE PROPULSION, SYSTÈME DE PROPULSION ET VÉHICULE AUTOMOBILE

(30) Priorität: 23.12.2016 DE 102016125607
(43) Veröffentlichungstag der Anmeldung: 30.10.2019
(73) Patentinhaber: Volkswagen Aktiengesellschaft, 38440 Wolfsburg (DE)
(72) Erfinder: EBUS, Feitse, 38108 Braunschweig (DE); HENTSCHEL, Lats, 38126 Braunschweig (DE)
(74) Vertreter: Bungartz, Florian
(86) Internationale Anmeldenummer: PCT/EP2017/082845
(87) Internationale Veröffentlichungsnummer: WO 2018/114600

(56) Entgegenhaltungen:
- DE-A1- 10 116 749
- DE-A1-102005 033 523
- DE-A1-102005 033 523
- DE-A1-102007 019 319
- DE-T2- 60 306 273
- DE-T5-112011 102 037
- US-A1- 2005 003 925
- US-A1- 2005 049 108
- US-A1- 2005 049 108

## Beschreibung

Die Erfindung betrifft ein Verfahren zum Betreiben eines hybriden Antriebssystems, das einerseits einen Verbrennungsmotor, der sowohl in einem Vollbetriebszustand als auch in einem Teilbetriebszustand betrieben werden kann, und andererseits einen mit dem Verbrennungsmotor in Antriebswirkung stehenden Elektromotor umfasst. Die Erfindung betrifft weiterhin ein entsprechendes Antriebssystem sowie ein Kraftfahrzeug mit einem solchen Antriebssystem.

Es sind mehrzylindrige Hubkolben- Verbrennungsmotoren bekannt, die temporär in einem sogenannten Teilbetriebszustand betrieben werden können, bei dem einzelne der Brennräume deaktiviert sind, so dass in diesen keine thermodynamischen Kreisprozesse durchgeführt werden. Vielmehr werden die Kolben der deaktivierten Brennräume dann von den Kolben der weiterhin aktiven Brennräume mitgeschleppt. Dies erfolgt mit dem Ziel einer Wirkungsgraderhöhung für den Betrieb der Verbrennungsmotoren, weil eine Deaktivierung eines Teils der Brennräume bei im Wesentlichen gleichbleibender Antriebsleistung zu einem Betrieb der verbliebenen aktiven Brennräume mit deutlich höherer Last führt, was mit einem höheren spezifischen Wirkungsgrad der in diesen Brennräumen durchgeführten thermodynamischen Kreisprozesse einhergeht. Um die für die aktiven Brennräume erreichbare Wirkungsgradsteigerung nur möglichst wenig durch das Mitschleppen der Kolben der deaktivierten Brennräume zu verringern ist in der Regel vorgesehen, die den deaktivierten Brennräumen zugeordneten Gaswechselventile im Teilbetriebszustand geschlossen zu halten, wodurch das innerhalb dieser Brennräume angeordnete Gas zyklisch komprimiert und expandiert, jedoch nicht ausgestoßen wird. Eine Verlustleistung infolge einer Komprimierung von Gasvolumina, die anschließend durch geöffnete Auslassventile ausgestoßen würden, kann auf diese Weise vermieden werden.

Ein Geschlossenhalten der Gaswechselventile der deaktivierten Brennräume kann mittels einer Vorrichtung zur Veränderung des Öffnungshubs realisiert werden, die in verschiedenen Ausgestaltungen bekannt sind.

Zur Erzielung eines möglichst großen Antriebskomforts für ein Kraftfahrzeug, das von einem in einem Teilbetrieb betreibbaren Verbrennungsmotor angetrieben wird, sollte ein Umschalten zwischen den Betriebsarten (Vollbetriebszustand und Teilbetriebszustand) möglichst momentenneutral und dadurch ohne "Antriebsruckeln" realisiert werden. Hierzu ist es erforderlich, die bei der Umschaltung abnehmende Last, mit der die zu deaktivierenden Zylinder betrieben werden, in möglichst optimal abgestimmter Weise durch eine zunehmende Last, mit der die weiterhin aktiv zu betreibenden Zylinder betrieben werden, zu kompensieren.

Eine bekannte Maßnahme zur Realisierung einer momentneutralen Umschaltung zwischen den Betriebsarten eines Verbrennungsmotors liegt in einer Veränderung der Zündzeitpunkte, wodurch der Verbrennungsdruck in den Brennräumen und damit das von dem Verbrennungsmotor erzeugte Drehmoment beeinflusst werden können. Dabei wird beispielsweise für eine Umschaltung von einem Vollbetrieb zu einem Teilbetrieb die Menge des in die Brennräume eingebrachten Kraftstoffs in etwa auf diejenige Menge, die in dem geplanten Teilbetrieb in die dann noch aktiven Brennräume eingebracht werden soll, gesteigert und gleichzeitig durch eine Änderung der Zündzeitpunkte der Wirkungsgrad gezielt so weit verschlechtert, dass mit der Erhöhung der Kraftstoffmengen vor dem Umschalten im Wesentlichen keine Drehmomenterhöhung verbunden ist. Für die Umschaltung können die dafür vorgesehenen Zylinder dann weitgehend momentenneutral deaktiviert werden, wobei für die weiterhin aktiv zu betreibenden Brennräume wieder auf die möglichst wirkungsgradoptimalen Zündzeitpunkte gewechselt wird. Problematisch dabei ist, dass mit einer solchen temporären Verschlechterung des Wirkungsgrads ein zeitweise relativ hoher Kraftstoffverbrauch des Verbrennungsmotors einhergeht. Das gleiche Problem stellt sich auch bei einer Umschaltung von einem Teilbetrieb zu einem Vollbetrieb, weil für eine möglichst momentenneutrale Umschaltung der Wirkungsgrad der Verbrennungsprozesse in allen Brennräumen nach dem Zuschalten der zuvor deaktivierten Brennräumen zunächst gezielt verschlechtert werden muss, bis die Last, mit denen die Brennräume betrieben werden, so weit reduziert worden ist, dass ein im Wesentlichen gleiches Drehmoment im Vergleich zu dem vorausgegangenen Teilbetrieb erreicht ist.

Die DE 603 06 273 T2 beschreibt ein Hybridfahrzeug mit einem Verbrennungsmotor, der sowohl in einem Voll- als auch einem Teilbetriebszustand betreibbar ist, sowie mit einem mit dem Verbrennungsmotor in Antriebswirkung stehenden Elektromotor. Vorgesehen ist, den Elektromotor unterstützend zu dem im Teilbetriebszustand betriebenen Verbrennungsmotor einzusetzen, um die Dauer, für die der Verbrennungsmotor in dem Teilbetriebszustand betrieben werden kann, zu verlängern. Die DE 603 06 273 T2 beschreibt zudem eine Ansteuerung des Verbrennungsmotors hinsichtlich einer Umschaltung zwischen Voll- und Teilbetriebszustand gemäß einer Hysterese, um bei einem leicht schwankenden Betrieb um einen für die Umschaltung vorgesehenen (mittleren) Grenzwert ein häufiges Umschalten zu vermeiden.

Die US 2005/0049108 A1 offenbart verschiedene Verfahren zum Betreiben eines Hybridfahrzeugs, das einen Verbrennungsmotor, der sowohl in einem Teil- als auch in einem Vollbetriebszustand betrieben werden kann, ein CVT-Getriebe und einen Elektromotor umfasst. Der in dem Teilbetriebszustand betriebene Verbrennungsmotor wird nicht in den Vollbetriebszustand umgeschaltet, solange die Differenz zwischen der insgesamt von dem Antriebsstrang aufzubringenden Soll-Leistung und der von dem Verbrennungsmotor erzeugten Ist-Leistung zuzüglich eines definierten Faktors durch den Elektromotor kompensiert werden kann. Eine zeitliche Beschränkung dieses kompensierenden Betriebs des Elektromotors auf einen definierten Zeitraum ist dabei nicht vorgesehen. Sofern jedoch ein Umschalten zwischen dem Teil- und dem Vollbetriebszustand vorgesehen ist, so soll ein zu häufiges Umschalten bei einem andauernden Betrieb in einem entsprechenden Umschaltbereich vermieden werden. Dies kann einerseits durch die Definition eines oberen Grenzwerts und eines unteren Grenzwerts und folglich durch ein Umschalten entsprechend einer Hystereseschleife erfolgen. Alternativ besteht die Möglichkeit, ein zu häufiges Umschalten basierend auf einem einzigen Grenzwert zu vermeiden, indem ausgehend von dem Teilbetriebszustand beim Erreichen des Grenzwerts in den Vollbetriebszustand gewechselt wird, während ausgehend von dem Vollbetriebszustand und beim Erreichen des Grenzwerts ein Umschalten in den Teilbetriebszustand für eine definierte Zeitspanne verzögert wird.

Die DE 10 2005 033 523 A1 beschreibt ein Verfahren zum Betreiben einer Antriebseinheit, die eine erste und eine zweite Komponente umfasst, wobei die Antriebseinheit abhängig von mindestens einer ersten Betriebsgröße in verschiedenen Betriebszuständen der ersten Komponente und abhängig von mindestens einer zweiten Betriebsgröße in verschiedenen Betriebszuständen der zweiten Komponente betrieben werden kann. Ein gleichzeitiger Wechsel der Betriebszustände der beiden Komponenten soll dabei vermieden werden. Bei den beiden Komponenten kann es sich insbesondere um einen Verbrennungsmotor, der sowohl in einem Teil- als auch in einem Vollbetriebszustand betrieben werden kann, sowie um ein Schaltgetriebe handeln. Demnach soll vermieden werden, dass ein Umschalten des Verbrennungsmotors zwischen dem Teil- und dem Vollbetriebszustand gleichzeitig mit einem Schalten des Schaltgetriebes erfolgt.

Die DE 11 2011 102 037 T5 beschreibt ein Hybridfahrzeug, bei dem der Verbrennungsmotor in einem Teil- und einem Vollbetriebszustand betreibbar ist, wobei bei einer Soll-Antriebsleistung, die größer als die von dem Verbrennungsmotor in dem Teilbetriebszustand erzeugbare Antriebsleistung ist, eine Kompensation dieser Leistungsdifferenz durch den Elektromotor erfolgen kann. Erst beim Erreichen der maximal durch den Elektromotor möglichen Kompensationsleistung wird der Verbrennungsmotor in den Vollbetriebszustand umgeschaltet.

Auch die DE 101 16 749 A1 offenbart ein Hybridfahrzeug, bei dem der Verbrennungsmotor in einem Teil- und einem Vollbetriebszustand betreibbar ist, wobei der Verbrennungsmotor sowohl bei einem Betrieb in dem Teil- als auch in dem Vollbetriebszustand durch den Elektromotor unterstützt werden kann.

Die US 2005/0003925 A1 beschreibt ein Verfahren zum Betreiben eines hybriden Antriebssystems mit einem auch in einem Teilbetriebszustand betreibbaren Verbrennungsmotor und einem mit diesem in Antriebsverbindung stehenden Elektromotor, wobei der Betriebsbereich, in dem der Verbrennungsmotor in dem Teilbetriebszustand betrieben werden kann, vergrößert ist, indem in einem Bereich oberhalb eines Grenzwerts für das von dem Verbrennungsmotor in dem Teilbetriebszustand erzeugbare Drehmoment ein höheres für den Betrieb des gesamten Antriebssystems gefordertes Antriebsmoment durch einen unterstützenden Betrieb des Elektromotors gewährleistet wird, bis beim Erreichen eines Grenzwerts für das Gesamt-Antriebsmoment ein tatsächliches Umschalten zwischen dem Vollbetriebszustand und dem Teilbetriebszustand erfolgt.

Der Erfindung lag die Aufgabe zugrunde, für ein hybrides Antriebssystem mit einem auch in einem Teilbetrieb betreibbaren Verbrennungsmotor ein vorteilhaftes Betriebsverfahren anzugeben. Insbesondere sollte für ein solches Antriebssystem ein erhöhter Kraftstoffverbrauch infolge von Umschaltungen zwischen Voll- und Teilbetrieb aufgrund von dazu initiierten, gezielten Wirkungsgradverschlechterungen möglichst gering gehalten werden.

Diese Aufgabe wird mittels eines Verfahrens gemäß dem Patentanspruch 1 gelöst. Ein zur Durchführung eines solchen Verfahrens geeignetes Antriebssystem ist Gegenstand des Patentanspruchs 8. Ein Kraftfahrzeug mit einem solchen Antriebssystem ist Gegenstand des Patentanspruchs 9. Vorteilhafte Ausführungsformen des erfindungsgemäßen Verfahrens und bevorzugte Ausgestaltungen des erfindungsgemäßen Antriebssystems sowie des erfindungsgemäßen Kraftfahrzeugs sind Gegenstände der weiteren Patentansprüche und/oder ergeben sich aus der nachfolgenden Beschreibung der Erfindung.

Erfindungsgemäß ist ein Verfahren zum Betreiben eines Antriebssystems für ein Kraftfahrzeug mit einem Verbrennungsmotor, insbesondere einem Ottomotor, und einem mit dem Verbrennungsmotor in Antriebswirkung stehenden Elektromotor vorgesehen. Erfindungsgemäß ist weiterhin ein entsprechendes Antriebssystem vorgesehen. Dabei wird unter einem "mit dem Verbrennungsmotor in Antriebswirkung stehenden Elektromotor" ein Elektromotor (bzw. eine zumindest auch motorisch einsetzbare Elektromaschine) verstanden, der direkt oder indirekt der Erzeugung einer Fahrantriebsleistung für das Kraftfahrzeug dient. Ein erfindungsgemäßes Kraftfahrzeug umfasst ein erfindungsgemäßes Antriebssystem, wobei das Antriebssystem zur Bereitstellung einer Fahrantriebsleistung für das Kraftfahrzeug vorgesehen ist.

Für die Verwendung in einem erfindungsgemäßen Verfahren und in einem erfindungsgemäßen Antriebssystem ist ein Verbrennungsmotor vorgesehen, der sowohl in einem Vollbetriebszustand als auch in einem Teilbetriebszustand betreibbar ist. Hierzu kann dieser jeweils mindestens einen ersten Brennraum und einen zweiten Brennraum ausbilden, die von in einem Zylindergehäuse ausgebildeten Zylindern und darin zyklisch auf und ab geführten Kolben begrenzt sind und in denen im Betrieb des Verbrennungsmotors thermodynamische Kreisprozesse durchführbar sind. In dem Vollbetriebszustand werden sowohl in dem (jedem) ersten Brennraum als auch in dem (jedem) zweiten Brennraum die thermodynamischen Kreisprozesse durchgeführt werden. In dem Teilbetriebszustand ist dagegen der (jeder) zweite Brennraum, deaktiviert, wobei dann in dem (jedem) ersten Brennraum die thermodynamischen Kreisprozesse durchgeführt werden und in dem (jedem) zweiten Brennraum die thermodynamischen Kreisprozesse nicht durchgeführt werden.

Während der thermodynamischen Kreisprozesse kann ein Gaswechsel in den Brennräumen mittels jeweils mindestens eines Einlassventils und eines Auslassventils, die mittels einer Ventilbetätigungseinrichtung, insbesondere direkt oder indirekt mittels mindestens einer Nockenwelle, betätigt werden, gesteuert werden. Zur Erzielung eines Teilbetriebs ausgehend von einem Vollbetrieb kann dann vorgesehen sein, dass der Öffnungshub (d.h. der größte Ventilhub, den ein Gaswechselventil während eines Öffnungszyklus einnimmt) des (jedes) dem (jedem) zweiten Brennraum zugeordneten Einlassventils und/oder der Öffnungshub des (jedes) dem (jedem) zweiten Brennraum zugeordneten Auslassventils bis auf null reduziert wird. Zur Erzielung eines Vollbetriebs ausgehend von einem Teilbetrieb kann dagegen vorgesehen sein, dass der Öffnungshub des (jedes) dem (jedem) zweiten Brennraum zugeordneten Einlassventils und/oder der Öffnungshub des (jedes) dem (jedem) zweiten Brennraum zugeordneten Auslassventils von null bis auf einen definierten Wert vergrößert wird. Der Verbrennungsmotor des erfindungsgemäßen Antriebssystems kann demnach zumindest für das (jedes) dem (jedem) zweiten Brennraum zugeordnete Einlassventil und/oder Auslassventil, vorzugsweise zusätzlich auch für das (jedes) dem (jedem) ersten Brennraum zugeordnete Einlassventil und/oder Auslassventil eine entsprechende Öffnungshubverstellvorrichtung umfassen.

Vorzugsweise sind mindestens zwei erste Brennräume und zwei zweite Brennräume vorgesehen, so dass es sich bei dem Verbrennungsmotor insbesondere um einen zumindest vierzylindrigen Verbrennungsmotor handeln kann. Grundsätzlich ist eine Ausgestaltung des Verbrennungsmotors mit einer geraden Anzahl an Brennräumen bevorzugt, wobei dann zudem jeweils eine Hälfte der Brennräume als erste und die andere Hälfte als zweite (deaktivierbare) Brennräume ausgebildet sein können. Andererseits ist auch eine Ausgestaltung des Verbrennungsmotors mit einer ungeraden Anzahl an Brennräumen möglich, wobei dann bevorzugt die Anzahl an ersten und zweiten (deaktivierbaren) Brennräumen die Hälfte plus/minus eins beträgt.

Für ein Umschalten von dem ersten Betriebszustand in den zweiten Betriebszustand ist ein von einem Soll-Antriebsmoment zumindest abhängiger, vorzugsweise ein vorgegebenes Soll-Antriebsmoment direkt beschreibender (erster) Grenzwert definiert. Dabei kann dieser Grenzwert auch variabel sein, so dass dieser in Abhängigkeit von verschiedenen Größen, die den aktuellen Betriebszustand des Antriebssystems definieren, unterschiedlich definiert sein kann. Beispielsweise können für unterschiedliche Drehzahlen, in denen der Verbrennungsmotor im Teilbetriebszustand betrieben werden kann, unterschiedliche (erste) Grenzwerte für das Soll-Antriebsmoment definiert sein. Das Soll-Antriebsmoment kann insbesondere aus der Stellung eines Fahrpedals oder dem Zustand einer sonstigen, von einem Bediener des Antriebssystems beeinflussbaren Eingabevorrichtung zur Definition einer Beschleunigung oder einer Fahrgeschwindigkeit (beispielsweise einer auch als "Tempomat" oder als "Cruise Control" bezeichneten Fahrgeschwindigkeitsregelanlage) hergeleitet werden.

Verfahrenstechnisch ist erfindungsgemäß vorgesehen, dass nach einem Überschreiten des (ersten) Grenzwerts ein Umschalten für einen definierten Zeitraum, der variabel sein und beispielsweise maximal zehn Sekunden, vorzugsweise maximal fünf Sekunden betragen kann, verzögert wird (d.h. unterbleibt), wobei (während dieser Verzögerung) eine Differenz zwischen dem Soll-Antriebsmoment und einem aktuellen Ist-Antriebsmoment des Verbrennungsmotors durch den Elektromotor (teilweise oder vorzugsweise möglichst vollständig) kompensiert wird, und dass nach dem Ablauf dieses Zeitraums ein Umschalten von dem Teilbetriebszustand in den Vollbetriebszustand (nur dann) erfolgt, sofern der (erste) Grenzwert weiterhin überschritten wird, wobei zudem vorgesehen ist, dass ein kompensierender Betrieb des Elektromotors beendet wird, sofern (d.h. immer erst nach dem Ablauf des definierten Zeitraums) oder sobald (d.h. gegebenenfalls auch schon vor dem Ablauf des definierten Zeitraums) der (erste) Grenzwert wieder unterschritten wurde. Das Ist-Antriebsmoments des Verbrennungsmotors kann dabei gemessen werden. Vorzugsweise wird dieses jedoch anhand der Betriebsparameter des Verbrennungsmotors, insbesondere anhand der Antriebsdrehzahl, der Menge des für jeden Verbrennungsvorgang einem Brennraum zugeführten Kraftstoffs und gegebenenfalls auch anhand der Menge des für jeden Verbrennungsvorgang einem/diesem Brennraum zugeführten Frischgases, ermittelt.

Das erfindungsgemäße Antriebssystem umfasst zur Durchführung eines erfindungsgemäßen Verfahrens eine Steuerungsvorrichtung, die entsprechend ausgebildet und insbesondere programmiert ist und die mit den für die Durchführung eines erfindungsgemäßen Verfahrens ansteuerbaren Komponenten des Antriebssystems in ansteuernder Wirkverbindung steht.

Erfindungsgemäß ist demnach vorgesehen, dass dann, wenn das Soll-Antriebsmoment den definierten (ersten) Grenzwert, für den grundsätzlich ein Umschalten von einem Teilbetrieb des Verbrennungsmotors in einen Vollbetrieb vorgesehen ist, überschreitet, ein solches Umschalten zunächst nicht vorgenommen wird, sondern ein Differenzmoment kurzzeitig durch den Elektromotor kompensiert wird und erst beziehungsweise spätestens nach dem Ablauf des definierten Zeitraums entschieden wird, ob das angeforderte Soll-Antriebsmoment dauerhaft beziehungsweise länger über dem (ersten) Grenzwert liegt, so dass ein Umschalten von dem Teilbetriebszustand in den Vollbetriebszustand auch tatsächlich lohnend ist. Verringert sich das Soll-Antriebsmoment dagegen innerhalb des definierten Zeitraums wieder auf einen Wert unterhalb des (ersten) Grenzwerts, soll ein Umschalten in den Vollbetriebszustand trotz des zuvor erfolgten Überschreitens des (ersten) Grenzwerts nicht durchgeführt werden. Der Verbrennungsmotor verbleibt somit bei einer nur kurzzeitigen Überschreitung des (ersten) Grenzwerts in dem Teilbetriebszustand, wodurch eine kurzfristig aufeinander folgende, zweifache Umschaltung in dem definierten, kurzen Zeitraum, nämlich zuerst von dem Teilbetriebszustand in den Vollbetriebszustand und kurzfristig darauf wieder von dem Vollbetriebszustand in den Teilbetriebszustand vermieden werden kann. Durch die Vermeidung solcher im Wesentlichen unnötigen Umschaltungen kann eine damit jeweils verbundene Erhöhung des spezifischen Kraftstoffverbrauchs infolge einer gezielten, temporären Wirkungsgradverschlechterung vermieden werden.

Dieser Vorteil entspricht im Wesentlichen demjenigen, der durch eine Ansteuerung der Umschaltung gemäß einer Hysterese, wie dies in der DE 603 06 273 T2 beschrieben ist, erreichbar ist. Ergänzender Vorteil bei dem erfindungsgemäßen Verfahren ist jedoch, dass durch die Kompensation des Differenzmoments mittels des Elektromotors das über dem (ersten) Grenzwert liegende Soll-Antriebsmoment auch tatsächlich erreicht werden kann. Somit kann beispielsweise ausgehend von einem im Wesentlichen stationären Betrieb eines erfindungsgemäßen Kraftfahrzeugs mit einer relativ geringen Geschwindigkeit von beispielsweise 50 Kilometer pro Stunde, für den die Antriebsleistung ausschließlich durch den mit relativ niedriger Last im Teilbetriebszustand betriebenen Verbrennungsmotor bereitgestellt wird, eine relativ geringe Erhöhung der angeforderten Fahrgeschwindigkeit auf beispielsweise 55 oder 60 Kilometer pro Stunde mit einer ausreichenden Beschleunigung realisiert werden, ohne dass dafür eine kurzzeitige Umschaltung von dem Teilbetriebszustand in den Vollbetriebszustand erforderlich wäre, die wieder rückgängig gemacht würde, sobald die angeforderte erhöhte Fahrgeschwindigkeit erreicht worden ist. Das für die Erhöhung der Fahrgeschwindigkeit mit ausreichender Beschleunigung erforderliche zusätzliche Antriebsmoment, das von dem Verbrennungsmotor im Teilbetrieb nicht aufgebracht werden kann, wird dabei erfindungsgemäß durch den Elektromotor bereitgestellt.

Gemäß einer bevorzugten Ausführungsform eines erfindungsgemäßen Verfahrens kann vorgesehen sein, dass ein Umschalten nur dann oder nur so lange verzögert wird, wenn/solange das den ersten Grenzwert überschreitende Soll-Antriebsmoment unterhalb eines zweiten Grenzwerts, der auch variable sein kann, liegt. Dadurch kann insbesondere erreicht werden, dass ein Umschalten von dem Teilbetriebszustand in den Vollbetriebszustand nur dann verzögert wird, wenn der Elektromotor auch tatsächlich in der Lage ist, die Differenz zwischen dem Soll-Antriebsmoment und dem Ist-Antriebsmoment des Verbrennungsmotors über einen ausreichend langen Zeitraum zu kompensieren. Wird dagegen ein darüber hinausgehendes (d.h. über dem zweiten Grenzwert liegendes) Soll-Antriebsmoment angefordert, kann vorzugsweise unmittelbar eine Umschaltung von dem Teilbetriebszustand in den Vollbetriebszustand des Verbrennungsmotors vorgenommen werden, um unmittelbar eine ausreichende Antriebsleistung des Antriebssystems bereitstellen zu können. Dies schließt selbstverständlich nicht aus, dass dabei der Elektromotor ebenfalls ein zusätzliches Antriebsmoment bereitstellt.

Weiterhin bevorzugt kann für die Durchführung eines erfindungsgemäßen Verfahrens vorgesehen sein, dass der erste Grenzwert und/oder der zweite Grenzwert und/oder der definierte Zeitraum in Abhängigkeit von einem aktuellen und/oder einem zukünftigen (d.h. für die (nähere) Zukunft prognostizierten) Betriebszustand des Antriebssystems, der einem aktuellen oder zukünftigen Fahrzustand des Kraftfahrzeugs entspricht, variabel gewählt wird. Hierzu können insbesondere Daten eines Navigationssystems und/oder eines Verkehrszeichenerkennungssystems und/oder eines Systems zur Erkennung eines Fahrbetriebs an einer Steigung oder an einem Gefälle und/oder eines Systems zur Erkennung eines aktuellen Gewichts des Kraftfahrzeugs (ggf. einschließlich Anhänger) ausgewertet werden. Signalisiert beispielsweise ein solches Navigationssystem und/oder ein solches Verkehrszeichenerkennungssystem eine Geschwindigkeitsbeschränkung (z.B. 50 km/h) und eine Fahrgeschwindigkeit in der Nähe der maximal zulässigen Geschwindigkeit, kann mit relativ großer Wahrscheinlichkeit davon ausgegangen werden, dass eine Überschreitung des ersten Grenzwerts für das Soll-Antriebsmoment nicht zu einer relativ großen Geschwindigkeitserhöhung führen soll, die dann durch eine Unterstützung des im Teilbetriebszustand betriebenen Verbrennungsmotor mittels des Elektromotors sinnvoll erreichbar ist. In gleicher Weise kann bei einer Fahrt an einem Gefälle eine angeforderte Geschwindigkeitserhöhung ebenfalls relativ problemlos mittels der Unterstützung durch den Elektromotor erreicht werden, ohne dass dazu ein Umschalten des Verbrennungsmotors von dem Teilbetriebszustand in den Vollbetriebszustand erforderlich wäre. Andererseits kann ein erkanntes Verlassen eines geschwindigkeitsbeschränkten Bereichs (z.B. beim Erreichen einer Ortsausfahrt), eine erkannte Fahrt an einer Steigung und/oder ein erkanntes relativ hohes Gesamtgewicht des Kraftfahrzeugs eine eher leistungsintensive Geschwindigkeitserhöhung erwarten lassen, so dass dann relativ und insbesondere möglichst kurzfristig in einen Vollbetriebszustand für den Verbrennungsmotor gewechselt werden kann.

Gemäß einer weiterhin bevorzugten Ausführungsform eines erfindungsgemäßen Verfahrens kann vorgesehen sein, dass der erste Grenzwert und/oder der zweite Grenzwert und/oder der definierte Zeitraum, für den ein Umschalten von dem Teilbetriebszustand in den Vollbetriebszustand verzögert wird, in Abhängigkeit von dem Ladezustand eines dem Elektromotor zugeordneten elektrischen Energiespeichers variabel gewählt wird. Dadurch wird in vorteilhafter Weise berücksichtigt, in welcher Höhe der Elektromotor überhaupt aufgrund einer potentiell ausreichenden Versorgung mit elektrischer Energie zur Kompensation eines Differenzmoments in der Lage ist. Dabei kann beispielsweise vorgesehen sein, dass bei einem relativ hohen Ladezustand der zweite Grenzwert und/oder der definierte Zeitraum relativ groß beziehungsweise lang gewählt wird, weil der Elektromotor aufgrund einer relativ guten Versorgung mit elektrischer Energie grundsätzlich in der Lage ist, den im Teilbetriebszustand betriebenen Verbrennungsmotor mit einer relativ hohen Antriebsleistung und/oder über einen relativ langen Zeitraum zu unterstützen.

Gemäß einer weiterhin bevorzugten Ausführungsform eines erfindungsgemäßen Verfahrens kann vorgesehen sein, dass zumindest unter bestimmten Umständen während der Verzögerung der Umschaltung das von dem Verbrennungsmotor erzeugte Ist-Antriebsmoment erhöht wird. Dadurch kann einerseits möglichst umgehend eine ausreichend großes Antriebsmoment durch den Verbrennungsmotor zur Verfügung gestellt werden, wenn nach dem Ablauf des definierten Zeitraums ein Umschalten von dem Teilbetriebszustand in den Vollbetriebszustand erfolgt (weil das Soll-Antriebsmoments weiterhin über dem (ersten) Grenzwert liegt). Andererseits kann dadurch erreicht werden, dass unmittelbar nach dem Beenden eines kompensierenden Betriebs des Elektromotors (weil das Soll-Antriebsmoments spätestens nach dem Ablauf des definierten Zeitraums wieder unterhalb des (ersten) Grenzwerts liegt) von dem Verbrennungsmotor eine im Vergleich zu dem Betrieb beim Überschreiten des (ersten) Grenzwerts erhöhte Antriebsleistung bereitgestellt wird. Dies kann beispielsweise dann vorteilhaft sein, wenn das Soll-Antriebsmoment den (ersten) Grenzwert kurzzeitig überschritten hat, weil eine geringfügige Erhöhung der Fahrgeschwindigkeit eines erfindungsgemäßen Kraftfahrzeugs vorgesehen war und eine solche auch erfolgt ist.

Das erfindungsgemäße Verfahren eignet sich besonders vorteilhaft zur Anwendung bei einem Antriebssystems, bei dem der Elektromotor ausschließlich zur unterstützenden Erzeugung eines Antriebsmoments vorgesehen (und insbesondere hierzu bezüglich seiner Leistungsfähigkeit auch entsprechend beschränkt ausgelegt) ist. Der Elektromotor eines solchen erfindungsgemäßen Antriebssystems ist demnach nicht dafür vorgesehen, zeitweise ausschließlich und folglich ohne Unterstützung durch den Verbrennungsmotor die von dem Antriebssystem aufzubringende Antriebsleistung zu erzeugen. Bei einem solchen Antriebssystem beziehungsweise bei einem ein solches Antriebssystem umfassenden Kraftfahrzeug, das auch häufig mit dem Begriff "Mild-Hybrid" bezeichnet wird, ist ein Teilbetrieb besonders vorteilhaft zur Erzielung eines möglichst hohen Wirkungsgrads einsetzbar, weil bei einem solchen Antriebssystem der Verbrennungsmotor grundsätzlich immer betrieben werden muss, sofern Antriebsleistung bereitgestellt werden soll, und dieser dabei häufig (aufgrund der Unterstützung durch den Elektromotor) in dem hinsichtlich des Wirkungsgrads vorteilhaften, hinsichtlich der Leistungsentfaltung jedoch nachteiligen Teilbetriebszustand betrieben werden kann, ohne dass sich dies negativ auf die Leistungsentfaltung des Antriebssystems insgesamt auswirkt. Bei einem Antriebssystem, das einen Verbrennungsmotor mit einem Elektromotor kombiniert, der auch alleine, d.h. ohne Unterstützung durch den Verbrennungsmotor, zur Bereitstellung einer für zumindest bestimmte Betriebszustände des Antriebssystems ausreichenden Antriebsleistung geeignet ist (häufig auch als "Voll-Hybrid" bezeichnet), könnte dagegen in vorteilhafter Weise ein Nichtbetrieb des Verbrennungsmotors in solchen Betriebszuständen, in denen bei einem als "Mild-Hybrid" ausgebildeten Antriebssystem ein Teilbetrieb des Verbrennungsmotors vorgesehen wäre, vorgesehen sein. Aus diesem Grund kann der Verbrennungsmotor eines als "Voll-Hybrid" ausgebildeten Antriebssystems in vorteilhafter Weise ohne Möglichkeit zum Betrieb in einem Teilbetriebszustand ausgebildet sein, weil dadurch dessen konstruktive Komplexität relativ gering gehalten werden kann. Unabhängig davon besteht jedoch auch die Möglichkeit, ein als "Voll-Hybrid" ausgebildetes Antriebssystem erfindungsgemäß auszugestalten und gemäß einem erfindungsgemäßen Verfahren zu betreiben.

Gegenstand der Erfindung ist im Übrigen auch eine Steuerungsvorrichtung mit einem Speicher, wobei in dem Speicher ein Computerprogramm hinterlegt ist, bei dessen Ausführung ein erfindungsgemäßes Verfahren durchführbar ist.

Die Erfindung betrifft zudem ein Computerprogramm mit einem Programmcode zum Ausführen eines erfindungsgemäßen Verfahrens, wenn das Computerprogramm auf einem Computer ausgeführt wird.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand von in den Zeichnungen dargestellten Ausführungsbeispielen näher erläutert. In den Zeichnungen zeigt, jeweils in vereinfachter Darstellung:
- Fig. 1:: ein erfindungsgemäßes Antriebssystem in einer schematischen Darstellung;
- Fig. 2:: einen Verbrennungsmotor für ein erfindungsgemäßes Antriebssystem gemäß der Fig. 1 in einer Aufsicht;
- Fig. 3:: den Verbrennungsmotor gemäß der Fig. 2 in einem Längsschnitt; und
- Fig. 4:: einen Abschnitt eines Nockenträgers des Verbrennungsmotors gemäß den Fig. 2 und 3 sowie einen dazugehörigen Umschaltaktuator.

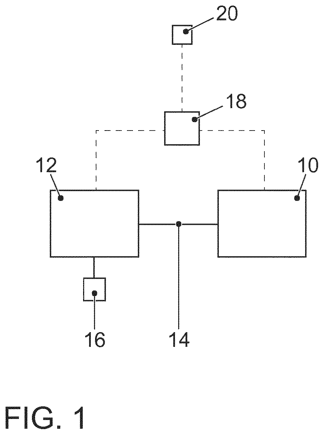

Fig. 1 zeigt in schematischer Darstellung ein erfindungsgemäßes, hybrides Antriebssystem für ein im Übrigen nicht dargestelltes Kraftfahrzeug (Hybridfahrzeug). Dieses umfasst einen Verbrennungsmotor 10 und einen mit dem Verbrennungsmotor 10 in Antriebswirkung stehenden Elektromotor 12. Eine Antriebsleistung, die von dem Elektromotor 12 und/oder von dem Verbrennungsmotor 10 erzeugt wurde, wird auf Räder einer oder mehrerer angetriebener Achsen des Kraftfahrzeugs übertragen. Eine Koppelung des Elektromotors 12 und des Verbrennungsmotors 10 (hinsichtlich der Antriebswirkung für das Kraftfahrzeug), die in der Fig. 1 schematisch anhand einer Welle 14 dargestellt ist, kann auf verschiedene Art und Weise realisiert werden. Beispielsweise kann vorgesehen sein, dass der Elektromotor 12 direkt oder unter Zwischenschaltung eines Getriebes auf eine Abtriebswelle (Kurbelwelle) des Verbrennungsmotors 10 wirkt.

Die Elektromotor 12 ist elektrisch leitend mit einem elektrischen Energiespeicher 16, beispielsweise mit einer Batterie, verbunden, durch die der Elektromotor 12 mit elektrischer Energie versorgt werden kann, sofern dieser motorisch betrieben werden soll. Gleichzeitig besteht auch die Möglichkeit, den Elektromotor 12 generatorisch zu betreiben, wodurch elektrische Energie erzeugt wird, die in dem Energiespeicher 16 speicherbar ist.

Sowohl der Elektromotor 12 als auch der Verbrennungsmotor 10 sind mittels einer Steuerungsvorrichtung 18 (Motorsteuerung) ansteuerbar. Dabei erfolgt eine Ansteuerung insbesondere in Abhängigkeit von der Stellung eines Fahrpedals 20, das von einem Fahrer des Kraftfahrzeugs betätigbar ist.

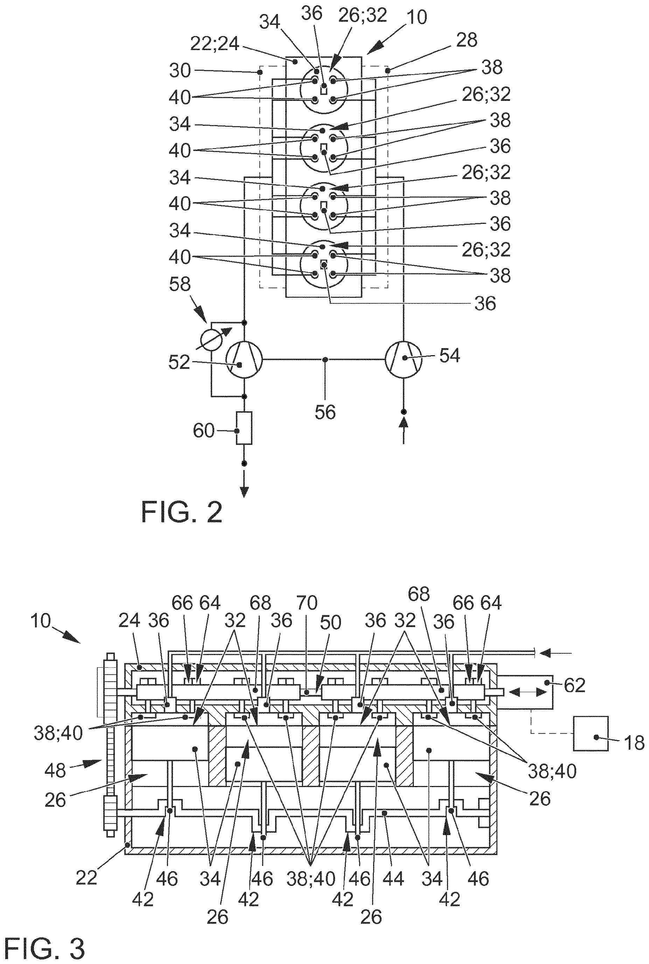

In den Fig. 2 und 3 ist schematisch ein Verbrennungsmotor 10 für ein erfindungsgemäßes Antriebssystem, beispielsweise für ein Antriebssystem gemäß der Fig. 1, dargestellt. Der Verbrennungsmotor 10 kann insbesondere nach dem Otto-Prinzip betreibbar und dafür entsprechend ausgestaltet sein.

Der Verbrennungsmotor 10 bildet in einem Verbund aus Zylindergehäuse 22 und Zylinderkopf 24 mehrere (z.B. vier) Zylinder 26 aus. Die Zylinder 26 sind einlassseitig mit einem Saugrohr 28 eines Frischgasstrangs und auslassseitig mit einem Abgaskrümmer 30 eines Abgasstrangs des Verbrennungsmotors 10 gasführend verbunden. In bekannter Weise wird in Brennräumen 32, die von den Zylindern 26 zusammen mit darin geführten Kolben 34 sowie mit dem Zylinderkopf 24 begrenzt sind, Frischgas (im Wesentlichen Luft) mit Kraftstoff verbrannt. Der Kraftstoff kann dazu mittels Injektoren 36 direkt in die Brennräume 32 eingespritzt werden. Das bei der Verbrennung der Kraftstoff-Frischgas-Gemische entstehende Abgas wird über den Abgasstrang abgeführt.

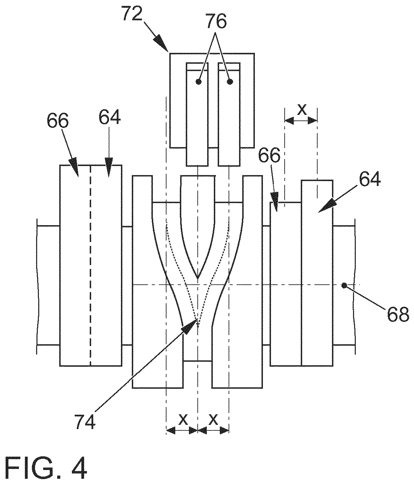

Die Zufuhr des Frischgases in die Brennräume 32 und die Abfuhr des Abgases aus den Brennräumen 32 wird über Gaswechselventile, im vorliegenden Ausführungsbeispiel über zwei Einlassventile 38 und zwei Auslassventile 40 je Zylinder 26, gesteuert, die von einem in der Fig. 2 nicht, in der Fig. 3 nur teilweise und in der Fig. 4 in weiteren Details dargestellten Ventiltrieb des Verbrennungsmotors 10 betätigt werden.

Der Ventiltrieb umfasst gemäß der Fig. 3 eine Kurbelzapfen 42 ausbildende Kurbelwelle 44, wobei die Kurbelzapfen 42 mit den Kolben 34 über Pleuel 46 verbunden sind. Dadurch werden Linearbewegungen der Kolben 34 in eine Rotation der Kurbelwelle 44 übersetzt, wobei die Rotation der Kurbelwelle 44 wiederum einen periodischen Richtungswechsel der Linearbewegungen der Kolben 34 bewirkt. Die Rotation der Kurbelwelle 44 wird zudem über ein Steuergetriebe, beispielsweise ein Zahnriemengetriebe 48, auf zwei Nockenwellen 50 übertragen, von denen jede zwei Gaswechselventile 38, 40 je Brennraum 32 betätigt. Von den Nockenwellen 50 ist eine als Einlassnockenwelle ausgebildet, d.h. diese betätigt (indirekt) alle Einlassventile 38, während die andere als Auslassnockenwelle ausgebildet ist und folglich (indirekt) alle Auslassventile 40 betätigt.

Der Verbrennungsmotor 10 umfasst weiterhin einen Abgasturbolader (vgl. Fig. 1). Dieser weist eine in den Abgasstrang integrierte Turbine 52 sowie einen in den Frischgasstrang integrierten Verdichter 54 auf. Ein von dem Abgasstrom rotierend angetriebenes Laufrad der Turbine 52 treibt über eine Welle 56 ein Laufrad des Verdichters 54 an. Die so bewirkte Rotation des Laufrads des Verdichters 54 verdichtet das durch diesen hindurch geführte Frischgas. Mittels eines Wastegates 58 kann eine Ladedruckbegrenzung erzielt werden, indem in einem Betrieb des Verbrennungsmotors 10 mit hohen Drehzahlen und/oder Lasten ein Teil des Abgasstroms an der Turbine 52 vorbei geführt wird. Weiterhin ist eine Abgasnachbehandlungsvorrichtung 60, beispielsweise in Form eines Dreiwegekatalysators, in den Abgasstrang integriert.

Der Verbrennungsmotor 10 umfasst weiterhin noch eine Umschaltvorrichtung 62, mittels der sowohl für die Einlassventile 38 als auch die Auslassventile 40 von einer Betätigung mittels eines ersten Nockens 64 zu einer Betätigung mittels eines zweiten Nockens 66 umgeschaltet werden kann. Diese Umschaltvorrichtung 62 ist von einer Steuerungsvorrichtung 18 ansteuerbar und in der Fig. 3 nur schematisch angedeutet. Die Funktion der Umschaltvorrichtung 62 beruht auf einer längsaxialen Verschiebbarkeit von hülsenförmigen Nockenträgern 68 (vgl. auch Fig. 4), die drehfest auf einer Grundwelle 70 angeordnet sind, mittels jeweils eines Umschaltaktuators 72 (vgl. Fig. 4), wobei die Nockenträger 68 für jedes der von diesen betätigbaren Einlassventile 38 und Auslassventile 40 zwei unterschiedliche Nocken 64, 66 aufweisen (vgl. Fig. 4), die in Abhängigkeit von den eingestellten Verschiebestellungen der Nockenträger 68 alternativ mit den dazugehörigen Einlassventilen 38 und Auslassventilen 40 zusammenwirken.

In dem Ausgestaltungsbeispiel, wie es in den Fig. 3 und 4 dargestellt ist, umfasst jeder der Nockenträger 68 insgesamt vier Nockenpaare, die jeweils einem Gaswechselventil 38, 40 der Brennkraftmaschine zugeordnet sind. Mittels der Nocken 64, 66, die von einem derartigen Nockenträger 68 ausgebildet sind, werden somit entweder die Einlassventile 38 oder die Auslassventile 40 von insgesamt zwei benachbarten Brennräumen 32 des Verbrennungsmotors 10, bei dem jedem Brennraum 32 zwei Einlassventile 38 und zwei Auslassventile 40 zugeordnet sind, betätigt. Zwischen den beiden den Gaswechselventilen 38, 40 eines ersten Brennraums 32 zugeordneten Nockenpaaren und den beiden den Gaswechselventilen 38 ,40 eines zweiten Brennraums 32 zugeordneten Nockenpaaren bildet der Nockenträger 68 gemäß der Fig. 4 weiterhin noch eine Schaltkulisse in Form einer Y-förmigen Führungsnut 74 aus. Durch ein Zusammenwirken dieser Führungsnut 74 mit Mitnehmern 76 des zugehörigen Umschaltaktuators 72 kann der Nockenträger 68 axial um die Distanz x verschoben und dadurch jeweils ein ausgewählter Nocken 64, 66 jedes Nockenpaars mit dem dazugehörigen Gaswechselventil 38, 40 in Wirkverbindung gebracht werden. Gemäß der Fig. 4 kann hierzu beispielsweise ausgehend von der dargestellten Funktionsstellung, in der die Gaswechselventile 38, 40 jeweils mit dem rechten (ersten) Nocken 64 jedes Nockenpaars in Wirkverbindung stehen, der rechte Mitnehmer 76 ausgefahren und der Nockenträger 68 dadurch, im Zusammenwirken mit seiner Rotation (in der Fig. 4 nach oben), um die Distanz x nach rechts verschoben werden. Infolge des Auslaufens der Y-förmigen Führungsnut 74 in dem mittleren, in der Fig. 4 unteren Abschnitt wird der rechte Mitnehmer 76 dabei wieder in die eingefahrene Stellung zurück bewegt. Nach einem solchen Verschieben des Nockenträgers 68 um die Distanz x befinden sich dann jeweils die linken (zweiten) Nocken 66 jedes Nockenpaars in Wirkverbindung mit dem dazugehörigen Gaswechselventil 38, 40. Ein solches Verschieben des Nockenträgers 68 um die Distanz x nach rechts führt weiterhin dazu, dass der linke Mitnehmer 76 In Überdeckung mit dem linken Abschnitt der Y-förmigen Führungsnut 74 gebracht wurde, so dass durch ein Ausfahren dieses Mitnehmers 76 der Nockenträger 68 wieder um die Distanz x nach links verschoben werden kann.

Es ist vorgesehen, dass für einen sogenannten Teilbetrieb des Verbrennungsmotors 10 eine Teilmenge und insbesondere die Hälfte der Brennräume 32, konkret die beiden mittigen Brennräume 32, deaktiviert werden können, indem eine Zufuhr von Kraftstoff zu den dazugehörigen Injektoren 36 unterbrochen und die diesen zugeordneten Gaswechselventile 38, 40 nicht mehr beziehungsweise mit einem Nullhub betätigt werden. Hierzu ist vorgesehen, dass jedes Nockenpaar, das den Gaswechselventilen 38, 40 eines solchen deaktivierbaren Brennraums 32 zugeordnet ist (vgl. das in der Fig. 4 rechts dargestellte Nockenpaar), einen zweiten Nocken 66 in Form eines sogenannten Nullnockens ausbildet, der keine Nockenerhebung aufweist und damit kein Öffnen eines diesem zugeordneten Gaswechselventils 38, 40 bewirkt.

Bei einer Umschaltung des Verbrennungsmotors 10 von einem Vollbetriebszustand, in dem sämtliche der Brennräume 32 mit vorzugsweise niedrigen bis mittleren Lasten betrieben werden, in einen solchen Teilbetriebszustand werden in einem sehr kurzen Zeitraum, der in etwa einer Umdrehung der Kurbelwelle 44 entspricht, die Hälfte der Brennräume 32 deaktiviert, die somit nicht mehr zur Erzeugung einer Antriebsleistung durch den Verbrennungsmotor 10 beitragen können. Im Gegenteil, da die diesen Brennräumen 32 zugeordneten Kolben 34 von den weiterhin aktiv bewegten Kolben 34 mitgeschleppt werden müssen, ändern die den deaktivierten Brennräumen 32 zugeordneten Kolben 34 ihre Funktion von einem Leistungserzeuger zu einem Leistungsverbraucher.

Da ein solches Umschalten von dem Vollbetrieb in den Teilbetrieb regelmäßig in einer konstanten Betriebsphase des Verbrennungsmotors 10 erfolgen soll, soll auch die Antriebsleistung vor und nach der Umschaltung im Wesentlichen konstant bleiben. Daher muss das Ausfallen der Kolben 34 der deaktivierten Brennräume 32 als Leistungserzeuger von den weiterhin aktiv betriebenen Brennräumen 32 kompensiert werden. Die Last, mit der diese nach einem Umschalten betrieben werden, muss dazu erheblich erhöht und insbesondere in etwa verdoppelt werden. Hierzu muss eine deutlich größere Menge an Kraftstoff umgesetzt werden, wozu eine in etwa entsprechend gesteigerte Menge von Frischgas erforderlich ist. Die erhöhte Menge an Frischgas kann durch eine Erhöhung des Drucks im Saugrohr 28 mittels üblicher Maßnahmen der Ladedruckregelung des Abgasturboladers erreicht werden. Durch eine höhere Verdichtung des Frischgases kann dann mehr Frischgas in die Brennräume 32 eingebracht werden, so dass auch eine entsprechend erhöhte Menge an Kraftstoff umsetzbar ist.

Um ein möglichst momentenneutrales Umschalten zwischen den Betriebsarten zu erreichen müssen die Maßnahmen zur Erreichung des von den aktiven Brennräumen 32 nach dem Umschalten zu erzeugenden Antriebsmoments ausreichend früh vor dem Umschalten initiiert werden. Für beispielsweise ein Umschalten von einem Vollbetriebszustand in einen Teilbetriebszustand müssen somit bereits vor der Stilllegung der den zu deaktivierenden Brennräumen 32 zugeordneten Gaswechselventile 38, 40 mittels der Umschaltvorrichtung 62 erhöhte Mengen an Frischgas sowie Kraftstoff in die Brennräume 32 eingebracht werden, so dass unmittelbar nach dem Umschalten in den Teilbetrieb von den dann weiterhin aktiven Brennräumen 32 das erforderliche Antriebsmoments bereitgestellt werden kann. Um vor dem Umschalten eine Erhöhung des Antriebsmoments infolge der erhöhten Mengen an Frischgas-Kraftstoff-Gemisch in den Brennräumen 32 zu vermeiden, kann vorgesehen sein, die Zündzeitpunkte für die Brennräume 32 derart zu verstellen, dass sich gezielt ein so schlechter Wirkungsgrad für die darin ablaufenden thermodynamischen Kreisprozesse einstellt, dass sich trotz eines erhöhten Umsatzes von Kraftstoff kein relevant erhöhtes Antriebsmoment einstellt. Eine solche Maßnahme führt jedoch dazu, dass ein Umschalten zwischen den Betriebsarten temporär mit einem relativ hohen Kraftstoffverbrauch verbunden ist, was nach Möglichkeit vermieden werden soll.

Dies wird erfindungsgemäß dadurch erreicht, dass kurzfristige aufeinander folgende, mehrfache Umschaltungen zwischen den Betriebsarten infolge einer Anforderung eines Soll-Antriebsmoments, das in der Nähe eines für eine solche Umschaltung vorgesehenen Grenzwerts liegt und das diesen Grenzwert dabei kurzfristig über- und unterschreitet, nach Möglichkeit vermieden werden. Hierzu ist vorgesehen, dass nach einem Überschreiten eines ersten Grenzwerts für das Soll-Antriebsmoment (sofern dieses nicht auch einen zweiten Grenzwert überschreitet) ein Umschalten für einen definierten Zeitraum verzögert wird, wobei während dieser Verzögerung eine Differenz zwischen dem Soll-Antriebsmoment und einem aktuellen Ist-Antriebsmoment, das der Verbrennungsmotor 10 bereitstellt, durch den Elektromotor 12 möglichst vollständig kompensiert wird. Sofern das angeforderte Soll-Antriebsmoment nach dem Ablauf dieses Zeitraums den ersten Grenzwert weiterhin überschreitet, wird mittels der Steuerungsvorrichtung 18 ein Umschalten von dem Teilbetriebszustand in den Vollbetriebszustand durchgeführt. Ist dies nicht der Fall, unterbleibt eine entsprechende Umschaltung. Zudem ist vorgesehen, dass spätestens dann (d.h. nach dem Ablauf des genannten Zeitraums) der das Differenzmoment kompensierende Betrieb des Elektromotors 12 beendet wird, so dass dann wiederum die gesamte Antriebsleistung des Antriebssystems ausschließlich durch den weiterhin im Teilbetriebszustand betriebenen Verbrennungsmotor 10 erzeugt wird.

### BEZUGSZEICHENLISTE

- 10: Verbrennungsmotor
- 12: Elektromotor
- 14: Welle
- 16: elektrischer Energiespeicher
- 18: Steuerungsvorrichtung
- 20: Fahrpedal
- 22: Zylindergehäuse
- 24: Zylinderkopf
- 26: Zylinder
- 28: Saugrohr
- 30: Abgaskrümmer
- 32: Brennraum
- 34: Kolben
- 36: Injektor
- 38: Gaswechselventil / Einlassventil
- 40: Gaswechselventil / Auslassventil
- 42: Kurbelzapfen
- 44: Kurbelwelle
- 46: Pleuel
- 48: Zahnriemengetriebe
- 50: Nockenwelle
- 52: Turbine
- 54: Verdichter
- 56: Welle
- 58: Wastegate
- 60: Abgasnachbehandlungsvorrichtung
- 62: Umschaltvorrichtung
- 64: erster Nocken
- 66: zweiter Nocken
- 68: Nockenträger
- 70: Grundwelle
- 72: Umschaltaktuator
- 74: Führungsnut
- 76: Mitnehmer

## Patentansprüche

1. Verfahren zum Betreiben eines Antriebssystems für ein Kraftfahrzeug mit einem Verbrennungsmotor (10) und einem mit dem Verbrennungsmotor (10) in Antriebswirkung stehenden Elektromotor (12), wobei der Verbrennungsmotor (10) sowohl in einem Teilbetriebszustand als auch in einem Vollbetriebszustand betreibbar ist, wobei für ein Umschalten von dem Teilbetriebszustand in den Vollbetriebszustand ein erster Grenzwert für ein durch das Antriebssystem aufzubringendes Soll-Antriebsmoment definiert ist, **dadurch gekennzeichnet, dass** nach einem Überschreiten des ersten Grenzwerts ein Umschalten für einen definierten Zeitraum verzögert wird, wobei eine Differenz zwischen dem Soll-Antriebsmoment und dem Ist-Antriebsmoment des Verbrennungsmotors durch den Elektromotor (12) kompensiert wird, und dass nach dem Ablauf des Zeitraums ein Umschalten von dem Teilbetriebszustand in den Vollbetriebszustand erfolgt, sofern der erste Grenzwert weiterhin überschritten wird, oder ein kompensierender Betrieb des Elektromotors (12) beendet wird, sofern nach dem Ablauf des Zeitraums oder sobald innerhalb des Zeitraums der erste Grenzwert wieder unterschritten wurde.

2. Verfahren gemäß Anspruch 1, **dadurch gekennzeichnet, dass** der definierte Zeitraum maximal 10 Sekunden beträgt.

3. Verfahren gemäß Anspruch 1 oder 2, **dadurch gekennzeichnet, dass** ein Umschalten nur dann oder nur so lange verzögert wird, wenn/solange das den ersten Grenzwert überschreitende Soll-Antriebsmoment unterhalb eines zweiten Grenzwerts liegt.

4. Verfahren gemäß einem der vorhergehenden Ansprüche, **dadurch gekennzeichnet, dass** der erste Grenzwert und/oder der zweite Grenzwert und/oder der definierte Zeitraum in Abhängigkeit von einem aktuellen und/oder zukünftigen Betriebszustand des Antriebssystems, der einem aktuellen oder zukünftigen Fahrzustand des Kraftfahrzeugs entspricht, variabel gewählt wird.

5. Verfahren gemäß einem der vorhergehenden Ansprüche, **dadurch gekennzeichnet, dass** der erste Grenzwert und/oder der zweite Grenzwert und/oder der definierte Zeitraum in Abhängigkeit von dem Ladezustand eines dem Elektromotor (12) zugeordneten elektrischen Energiespeichers (16) variabel gewählt wird.

6. Verfahren gemäß einem der vorhergehenden Ansprüche, **dadurch gekennzeichnet, dass** während der Verzögerung der Umschaltung das von dem Verbrennungsmotor (10) erzeugte Ist-Antriebsmoment erhöht wird.

7. Verfahren gemäß einem der vorhergehenden Ansprüche, **gekennzeichnet durch** die Anwendung bei einem Antriebssystem, bei dem der Elektromotor (12) ausschließlich zur unterstützenden Erzeugung eines Antriebsmoments vorgesehen ist.

8. Antriebssystem mit einem Verbrennungsmotor (10) und einem mit dem Verbrennungsmotor (10) in Antriebswirkung stehenden Elektromotor (12), wobei der Verbrennungsmotor (10) sowohl in einem Teilbetriebszustand als auch in einem Vollbetriebszustand betreibbar ist, **gekennzeichnet durch** eine Steuerungsvorrichtung (18), die derart ausgebildet ist, dass diese ein Verfahren gemäß einem der vorhergehenden Ansprüche ausführen kann.

9. Kraftfahrzeug mit einem Antriebssystem gemäß Anspruch 8.

## Claims

1. Method for operating a drive system for a motor vehicle having an internal combustion engine (10) and having an electric motor (12) which is connected in terms of drive action to the internal combustion engine (10), wherein the internal combustion engine (10) is operable both in a partial operating state and in a full operating state, wherein a first threshold value for a setpoint drive torque to be imparted by the drive system is defined for a switch from the partial operating state into the full operating state, **characterized in that**, after an overshooting of the first threshold value, a switch is delayed for a defined period of time, wherein a difference between the setpoint drive torque and the actual drive torque of the internal combustion engine is compensated by the electric motor (12), and **in that**, after the expiry of the period of time, a switch from the partial operating state into the full operating state occurs if the first threshold value continues to be overshot, or compensating operation of the electric motor (12) is ended if the first threshold value has been undershot again after the expiry of the period of time or as soon as the first threshold value has been undershot again within the period of time.

2. Method according to Claim 1, **characterized in that** the defined period of time amounts to at most 10 seconds.

3. Method according to Claim 1 or 2, **characterized in that** a switch is delayed only if, or only for as long as, the setpoint drive torque that overshoots the first threshold value lies below a second threshold value.

4. Method according to any one of the preceding claims, **characterized in that** the first threshold value and/or the second threshold value and/or the defined period of time is variably selected in a manner dependent on a present and/or future operating state of the drive system, which corresponds to a present or future driving state of the motor vehicle.

5. Method according to any one of the preceding claims, **characterized in that** the first threshold value and/or the second threshold value and/or the defined period of time is variably selected in a manner dependent on the state of charge of an electrical energy store (16) assigned to the electric motor (12).

6. Method according to any one of the preceding claims, **characterized in that**, during the delay of the switch, the actual drive torque generated by the internal combustion engine (10) is increased.

7. Method according to any one of the preceding claims, **characterized by** use in a drive system in which the electric motor (12) is provided exclusively for supportive generation of a drive torque.

8. Drive system having an internal combustion engine (10) and having an electric motor (12) which is connected in terms of drive action to the internal combustion engine (10), wherein the internal combustion engine (10) is operable both in a partial operating state and in a full operating state, **characterized by** a control device (18) which is designed such that it can carry out a method according to any one of the preceding claims.

9. Motor vehicle having a drive system according to Claim 8.

## Revendications

1. Procédé permettant de faire fonctionner un système d'entraînement pour un véhicule automobile comprenant un moteur à combustion interne (10) et un moteur électrique (12) en liaison d'entraînement avec le moteur à combustion interne (10), le moteur à combustion interne (10) pouvant fonctionner aussi bien dans un état de fonctionnement partiel que dans un état de fonctionnement intégral, une première valeur seuil pour un couple d'entraînement théorique à appliquer par le système d'entraînement étant définie pour une commutation de l'état de fonctionnement partiel à l'état de fonctionnement intégral,
**caractérisé en ce qu'**après un dépassement de la première valeur limite, une commutation est retardée pendant une période définie, une différence entre le couple d'entraînement théorique et le couple d'entraînement réel du moteur à combustion interne étant compensée par le moteur électrique (12), et **en ce qu'**à l'expiration de la période, une commutation de l'état de fonctionnement partiel à l'état de fonctionnement intégral est effectuée dans la mesure où la première valeur limite est toujours dépassée, ou un fonctionnement compensé du moteur électrique (12) est terminé dans la mesure où la première valeur limite a de nouveau été soupassée à l'expiration de la période ou dès que la valeur limite a de nouveau été dépassée durant la période.

2. Procédé selon la revendication 1, **caractérisé en ce que** la période définie dure au maximum 10 secondes.

3. Procédé selon la revendication 1 ou 2, **caractérisé en ce qu'**une commutation est retardée seulement lorsque le couple d'entraînement théorique dépassant la première valeur seuil est inférieur à une deuxième valeur seuil ou seulement tant qu'il est inférieur à ladite valeur.

4. Procédé selon l'une quelconque des revendications précédentes, **caractérisé en ce que** la première valeur limite et/ou la deuxième valeur limite et/ou la période définie sont sélectionnées de manière variable en fonction d'un état de fonctionnement actuel et/ou futur du système d'entraînement qui correspond à un état de conduite actuel ou futur du véhicule automobile.

5. Procédé selon l'une quelconque des revendications précédentes, **caractérisé en ce que** la première valeur limite et/ou la deuxième valeur limite et/ou la période définie sont sélectionnées de manière variable en fonction de l'état de charge d'un accumulateur d'énergie électrique (16) associé au moteur électrique (12) .

6. Procédé selon l'une quelconque des revendications précédentes, **caractérisé en ce que** pendant le retard de la commutation, le couple d'entraînement réel généré par le moteur à combustion interne (10) est augmenté.

7. Procédé selon l'une quelconque des revendications précédentes, **caractérisé par** l'utilisation avec un système d'entraînement dans lequel le moteur électrique (12) est prévu exclusivement pour la génération auxiliaire d'un couple d'entraînement.

8. Système d'entraînement comprenant un moteur à combustion interne (10) et un moteur électrique (12) en liaison d'entraînement avec le moteur à combustion interne (10), le moteur à combustion interne (10) pouvant fonctionner aussi bien dans un état de fonctionnement partiel que dans un état de fonctionnement intégral, **caractérisé par** un dispositif de commande (18) qui est réalisé de telle sorte qu'il peut exécuter un procédé selon l'une quelconque des revendications précédentes.

9. Véhicule automobile comprenant un système d'entraînement selon la revendication 8.
